# EUROPÄISCHE PATENTSCHRIFT

(11) **EP 1 119 966 B1**
(45) Veröffentlichungstag und Bekanntmachung des Hinweises auf die Patenterteilung: **02.05.2002**
(21) Anmeldenummer: 99955741.6
(22) Anmeldetag: 17.09.1999
(51) Int. Cl.: H04N 5/217

(54) **VERFAHREN UND VORRICHTUNG ZUR KORREKTUR DEFEKTER BILDPUNKTE EINES BILDSENSORS**
METHOD AND DEVICE FOR CORRECTING DEFECTIVE PIXELS OF AN IMAGE SENSOR
PROCEDE ET DISPOSITIF POUR LA CORRECTION DE POINTS D'IMAGE DEFECTUEUX D'UN CAPTEUR D'IMAGES

(30) Priorität: 30.09.1998 DE 19845002
(43) Veröffentlichungstag der Anmeldung: 01.08.2001
(73) Patentinhaber: Infineon Technologies AG, 81669 München (DE)
(72) Erfinder: KOREN, Ivo, D-81543 München (DE); GEIB, Heribert, D-85567 Grafing (DE); RAMACHER, Ulrich, D-81545 München (DE); KIRMSER, Stephane, D-80333 München (DE)
(74) Vertreter: Viering, Jentschura & Partner
(86) Internationale Anmeldenummer: DE9902992
(87) Internationale Veröffentlichungsnummer: WO0019712

(56) Entgegenhaltungen:
- EP-A- 0 440 563
- US-A- 5 381 175
- PATENT ABSTRACTS OF JAPAN vol. 1997, no. 10, 31. Oktober 1997 (1997-10-31) & JP 09 168120 A (SONY CORP), 24. Juni 1997 (1997-06-24)

## Beschreibung

Die Erfindung betrifft ein Verfahren und eine Vorrichtung, bei dem/der defekte Bildpunkte des Bildsensors in einem Defekt-Speicher gespeichert sind und die Ausgangssignale dieser defekten Bildpunkte durch eine Interpolation aus den Nachbarbildpunkten ersetzt werden. Derartige Verfahren sind aus US-A-5 381 175 und EP-A-0 440 563 bekannt.

Unter Bildsensoren sollen hier insbesondere CMOS-Bildsensoren verstanden werden, die eine große Anzahl von Bildpunkten (Pixeln), zum Beispiel 720 x 576 Pixel für die TV-Auflösung, enthalten. Technolgie- und fertigungsbedingt sind hier nur bei einem geringen Prozentsatz aller Chips alle Pixelstrukturen voll funktionsfähig. Bei den meisten Chips würde man in dem aufgenommenen Bild mehrere defekte Pixel sehen, die entweder ständig weiß oder schwarz sind oder deren Grauwertübertragungseigenschaft sich im Vergleich zu den Nachbarpixeln unterscheidet. Eine typische räumliche Defektverteilung ist unkorreliert und die Defekthäufigkeit liegt im Promille-Bereich. In einem digitalen Video-Datenstrom ist es einfach, solche Defekte durch lineare Interpolation der Grauwerte der zum Defekt benachbarten Pixel auszublenden. Für jedes Pixel wird beispielsweise der arithmetische Mittelwert aus dem vorhergehenden und dem nachfolgenden Pixelwert gebildet. In Abhängigkeit von der Position des Pixels im Bild muß beispielsweise ein Defektsignal generiert werden, das anzeigt, ob das gerade übertragene Pixel korrekt oder defekt ist.. Dieses Signal steuert beispielsweise einen Multiplexer, der entweder den korrekten oder den interpolierten Wert zum Ausgang durchschaltet.

Eine einfache Speicherung des Defektmusters als Bitmuster ist sehr teuer, da zum Beispiel für die TV-Auflösung 404 kBit gespeichert werden müßten. Trotz der geringen Defekthäufigkeit von ca. 0,1 Prozent ist eine Lauflängenkodierung, hier also der Abstand zweier aufeinanderfolgender Defekte, ungeeignet, da die Reihenfolge der Defekte von der Größe und Lage eines jeweiligen Teilbides abhängen. Eine weitere speichersparende Methode ist die Speicherung der Defektadressen in Form von Zeilen- und Spaltennummer. Für beide zuletzt genannten Verfahren ist jedoch zum Auslesen von Teilbildern ein Assoziativspeicher erforderlich, der deutlich komplexer ist als ein vergleichbarer gewöhnlicher Schreib-/Lesespeicher.

JP-A-9 168 120 zeigt eine Lösung, den Speicherbedarf für eine Defekterkennung zu vermindern. Dazu werden jeweils Zeilen- und Spaltenadresse sowie ein Feldindex in entsprechenden gekennten Speichern abgelegt.

Die der Erfindung zugrundeliegende Aufgabe liegt darin, ein Verfahren bzw. eine Vorrichtung anzugeben, bei dem/der die Defekte des Bildsensors auf der Basis gewöhnlicher RAMs mit möglichst geringem Speicherbedarf abgespeichert werden kann.

Diese Aufgabe wird hinsichtlich des Verfahrens durch die Merkmale des Patentanspruchs 1 und hinsichtlich der Vorrichtung durch die Merkmale des Patentanspruchs 4 gelöst. Alle weiteren Ansprüche betreffen bevorzugte Ausgestaltungen des erfindungsgemäßen Verfahrens und der erfindungsgemäßen Vorrichtung.

Bei der Erfindung werden lediglich zwei gewöhnliche RAM und nur wenige weitere Bauelemente benötigt. Die Anzahl der Speicherzellen im ersten Schreib-/Lesespeicher entspricht dabei der Zeilenzahl des Bildes und der zweite Schreib-/Lesespeicher benötigt beispielsweise nur ca. 1000 Speicherplätze.

Nachfolgend wird die Erfindung anhand eines in den Zeichnungen dargestellten Ausführungsbeispiels näher erläutert. Dabei zeigt
- Figur 1: ein allgemeines Blockschaltbild einer Vorrichtung zur Korrektur defekter Bildpunkte mit einer Defektspeichereinrichtung,
- Figur 2: eine Darstellung zur Verdeutlichung der Speicheradressierung in der Defektspeichereinrichtung von Figur 1,
- Figur 3: ein Blockschaltbild zur Erläuterung des erfindungsgemäßen Verfahrens und
- Figur 4: ein Beispiel einer erfindungsgemäßen Vorrichtung.

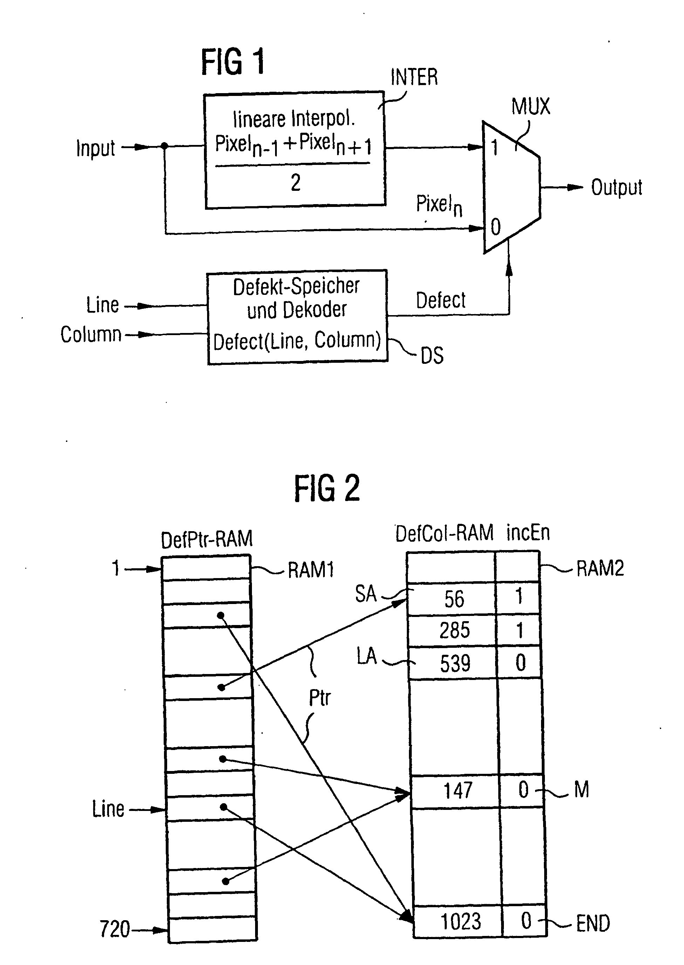

In Figur 1 ist ein allgemeines Blockschaltbild zur Erläuterung der Korrektur defekter Bildpunkte eines Bildsensors dargestellt, wobei eine Interpolationseinrichtung INTER, ein Umschalter MUX und ein Defektspeichereinrichtung DS vorhandensind. Die Defektspeichereinrichtung DS wird mit einer Bildzeilenadresse Line und einer Bildspaltenadresse Column versorgt und liefert davon abhängig ein Defektsignal Defect, das den Umschalter MUX ansteuert. Falls kein Defekt vorliegt, wenn also das Signal Defect gleich Null ist, werden Eingangsbilddaten Input direkt als Ausgangsbilddaten Output durchgeschaltet. Im anderen Fall, wenn ein Defekt an der durch Line und Column adressierten Stelle des Bildsensors vorliegt, wenn also durch das Signal Defect gleich Eins ist, werden die Eingangsbilddaten Input von Nachbarbildpunkten hier beispielsweise linear interpoliert und durch den Umschalter an den Ausgang für die Ausgangsbildpunktdaten durchgeschaltet.

Die Defektspeichereinrichtung DS von Figur 1 enthält zwei Schreib-/Lesespeicher RAM1 und RAM2, die in Figur 2 dargestellt sind. Der erste Schreib-/Lesespeicher RAM1 dient dabei als Zeigerspeicher und wird von der Bildzeilenadresse Line direkt adressiert. Die Speicherzellen des Zeigerspeichers enthalten Zeiger Ptr, die Zellen im zweiten Schreib-/Lesespeicher RAM2, der als Defektspalten-Speicher dient, adressieren. Bei der Adressierung des Defektspalten-Speichers treten unterschiedliche Adressierungssituationen auf, wobei drei Fälle besonders hervorzuheben sind. Im ersten Fall zeigt einer der Zeiger Ptr auf eine Zelle mit der Startadresse SA in der hier beispielsweise eine Defekt-Spaltennummer 56 gespeichert ist. Zusätzlich zu jeder Defektspaltennummer ist im Defektspalten-Speicher auch jeweils ein einzelnes Fortsetzungsbit incEn gespeichert, das anzeigt, daß es in der Bildzeile Line noch weitere defekte Spalten gibt. Die weiteren defekten Spalten folgen unmittelbar auf die Zelle mit der Startadresse SA und eine letzte Defektspalte der Bildzeile Line wird dadurch erkannt, daß das zugehörige Fortsetzungsbit bei Null und bei den übrigen Defektspalten dieser Zeile gleich Eins ist. Die durch die Startadresse SA adressierte Zelle enthält hier die Defektspaltennummer 56, darauf folgt hier eine Zelle die eine Defektspaltennummer 285 und nach der eine durch eine letzte Adresse LA adressierte Zelle, die eine Defektspaltennummer 539 aufweist, was insgesamt andeuten soll, daß die Defektspaltennummern einer Bildzeile in aufsteigender Reihenfolge abgelegt sind. Der zweite hier angedeutete Fall ist der, daß mehrere defekte Bildpunkte in einer Spalte vorliegen. Hierbei zeigen mehrere Zeiger Ptr auf ein und dieselbe Zelle M im Defektspalten-Speicher, die hier beispielsweise die Defektspaltennummer 147 beinhaltet und deren Fortsetzungsbit natürlich Null ist. Im Fall, daß mehrere Zeilen einen Defekt in der gleichen Spalte aufweisen, können mehrere Zeiger auf denselben Eintrag im Defektspalten-Speicher zeigen, wodurch die maximal speicherbare Anzahl der Defekte die Zahl der Worte im Defektspalten-Speicher sogar übertreffen wird. Im letzten Fall, zeigen alle zu Bildzeilen ohne Defekte gehörigen Zeiger Ptr gemeinsam beispielsweise auf eine letzte Zelle END des Defektspalten-Speichers.

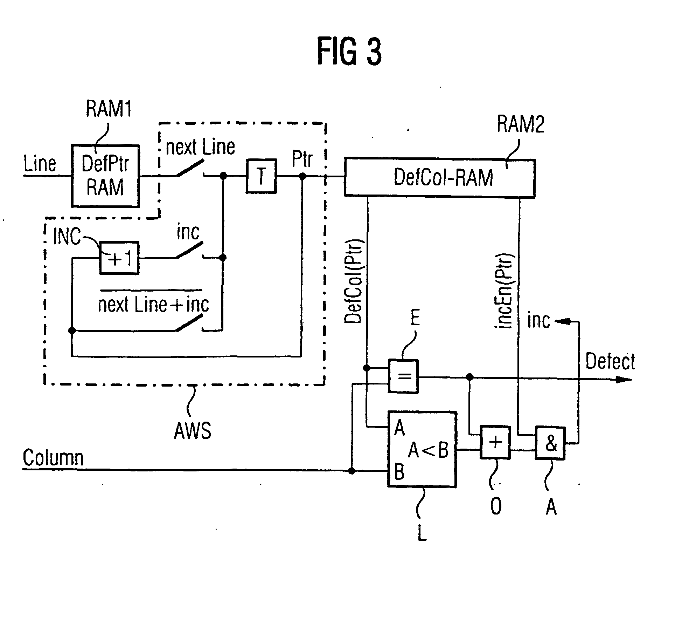

In Figur 3 ist die Defektspeichereinrichtung DS zur Erläuterung des erfindungsgemäßen Verfahrens in Form ein Blockdiagramms detaillierter dargestellt. Die Bildzeilenadresse Line adressiert wiederum den Speicher RAM1, dessen ausgelesene Daten an eine Adreßweiterschaltungseinheit AWS übergeben werden innerhalb der dann die Zeiger Ptr in Form von Adressen für den Defektspalten-Speicher RAM2 gebildet werden. Ein Verzögerungsglied T dient lediglich zur zeitlichen Entkopplung des Eingangs und des Ausgangs der Adreßweiterschalteinheit AWS. In der Einheit AWS wird praktisch die nächste Zeile im Defektspalten-Speicher berechnet, wobei die im Zusammenhang mit Figur 2 näher erläuterten drei Fälle unterschieden werden und eine direkte Adreßübergabe, eine Inkrementierung der Adressen oder eine Beibehaltung der bisherigen Adresse erfolgt. Für den Fall, daß vom Bildsensor ein Vollbild abgetastet wird, wird die Bildspalte Column mit der dem Speicher RAM2 ausgelesenen Defektspaltennummer in einer Vergleichsinrichtung E auf Gleichheit geprüft und liefert bei Gleichheit das Defektsignal Defect. Aus dem zugehörigen Fortsetzungsbit incEn wird durch UND-Verknüpfung mit dem Defektsignal ein Forsetzungssignal inc gebildet, das die Adreßweiterschaltungseinheit zum Inkrementieren der Zeilenadresse des Defektspalten-Speichers veranlaßt.

Für den Fall, daß nur ein Teilbild des Bildsensors ausgelesen wird, können ein oder mehrere Defekte links von dem gewünschten Bildfenster liegen. Die entsprechenden Einträge müssen dann überlesen werden. Beginnt beispielsweise das Teilbild erst mit der Spaltennummer 100, so müßte im Beispiel von Figur 2 der Defektspalteneintrag 56, im Speicher RAM2 bei Adresse SA überlesen werden, damit die Adreßzuordnung zwischen dem Bildsensor und dem Defektspeicher wieder richtig erfolgt. Hierzu wird die Bildspaltennummer Column in einem Vergleicher L mit der Defektspaltennummer aus dem Speicher RAM2 verglichen und, wenn die Defektspaltennummer kleiner ist als die Spaltennummer, in der Adreßweiterschaltungseinheit AWS durch das Signal inc solange eine Inkrementierung ausgelöst bis die Defektspaltennummern innerhalb des Teilbildes des Bildsensors liegen. Hierbei wird das Ausgangssignal des Vergleichers L mit dem Defektsignal Defect in einer ODER-Schaltung O verknüpft und das Ausgangssignal der ODER-Schaltung wiederum mit dem Fortsetzungsbit incEn mit Hilfe eines UND-Gatters A zum Signal inc verknüpft, da in der Zeile und also auch im Teilbild weitere Fehler (incEn=1) liegen müssen.

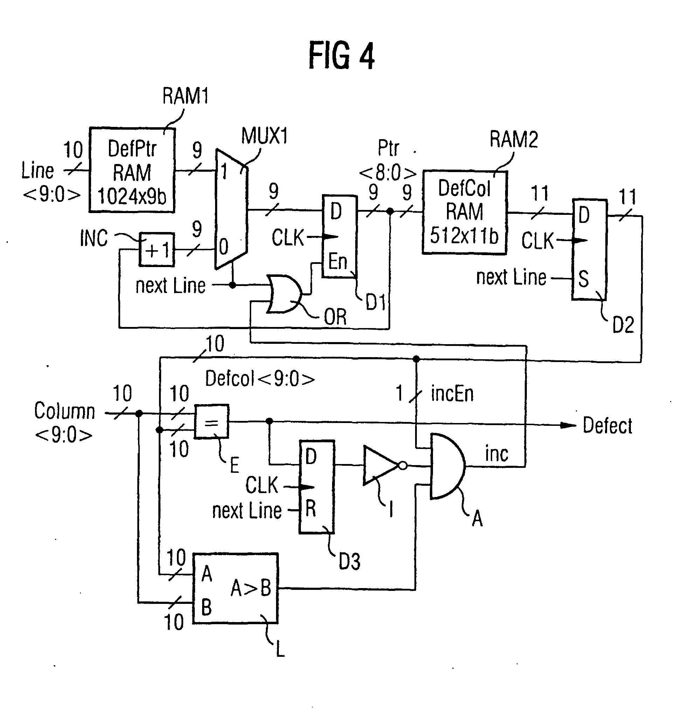

In Figur 4 ist ein Beispiel einer konkreten Realisierung der erfindungsgemäßen Vorrichtung dargestellt. Der Zeigerspeicher RAM1 weist dabei 1024 9-Bit-Wörter und der Defektspalten-Speicher RAM2 512 11 Bit-Worte auf. Der Speicher RAM1 wird durch eine 10 Bit breite Bildzeilennummer adressiert und liefert einen 9 Bit breiten Zeiger Ptr, der über einen Multiplexer MUX1 und ein Register D1 dem Defektspalten-Speicher RAM2 als Adresse zugeführt wird. Am Ausgang des Defektspalten-Speichers wird ein 11 Bit breites Ausgangssignal einem weiteren Register D2 zugeführt, wobei sich die 11 Bit aus einer 10 Bit breiten Defektspaltennummer und dem Fortsetzungsbit incEn zusammensetzt. Die Defektspaltennummer wird in einer Äquivalenzschaltung E mit der Bildspaltennummer verglichen und liefert das Defektsignal Defect. Das Defektsignal wird über ein 1-Bit-Register, das durch ein internes Zeilenweiterschaltsignal nextLine rücksetzbar ist, und einen Inverter I einem Eingang einer UND-Schaltung A zugeführt, die einen weiteren Eingang aufweist, der mit dem Fortsetzungsbit incEn versorgt wird. Darüber hinaus wird in einer Vergleicherschaltung L die Spaltennummer bzw. Bild-Spaltenadresse mit der Defektspaltennummer verglichen und festgestellt, ob die Defektspaltennummer DefCol kleiner ist als die Spaltennummer Column. Das Ausgangssignal der Vergleicherschaltung L ist mit einem weiteren Eingang der UND-Schaltung A verbunden, die ihrerseits das Fortsetzungssignal inc bildet. Dieses Fortsetzungssignal wird mit einem internen Signal ODER-verknüpft und dem Enable-Eingang des ersten Registers D1 zugeführt. Der Multiplexer MUX1 weist einen 9 Bit breiten Null-Eingang auf, der das durch die Inkrementierschaltung inc Inkrementierzeigersignal Ptr erhält. Die Umschaltung des Multiplexers MUX1 erfolgt durch das interne Zeilensignal nextLine. Diese Schaltung kann als Defekt-Korrektureinheit einer digitalen Einchip-Kamera verwendet werden. Um die geforderte Verarbeitungsgeschwindigkeit zu erreichen wird hier zwischen dem Defekt Spaltenspeicher RAM2 und den Vergleichern das Register D2 geschaltet. Infolgedessen stehen nach einer Erkennung eines defekten Pixels und der Inkrementierung des Zeigers Ptr die zum Zeiger gehörige Defektspaltennummer und das zum Zeiger gehörige Fortsetzungsbit erst einen Takt später zur Verfügung. Damit der Zeiger nicht ein zweites Mal inkrementiert wird, weil die Bedingungen Spaltennummer Column > Defektspaltennummer und Fortsetzungsbit incEn = 1 gleichzeitig erfüllt werden, wird das Inkrementieren des Zeigers Ptr vom durch das Register D3 verzögerten Defektsignal abhängig gemacht, und somit, wenn im letzten Taktzyklus ein Defekt erkannt und der Zeiger inkrementiert wurde, im aktuellen Taktzyklus die Inkrementierung verhindert.

## Patentansprüche

1. Verfahren zur Korrektur defekter Bildpunkte eines Bildsensors, bei dem abhängig von einem Defektsignal (Defect) im fehlerfreien Fall Eingangsbildpunktdaten (Input) als Ausgangsbildpunktdaten (Output) ausgegeben werden und im Fehlerfall aus Nachbarbildpunktdaten interpolierte Bildpunktdaten als Ausgangsbildpunktdaten ausgegeben werden,
bei dem das Fehlersignal aus einer Bildzeilenadresse (Line) und einer Bildspaltenadresse (Column) derart gebildet wird, daß mit Hilfe der Bildzeilenadresse ein Zeigerspeicher (RAM1) adressiert wird, der für zumindest einen Teil der Bildzeilen jeweils einen Zeiger (Ptr) enthält, der zur Adressierung eines Defektspalten-Speichers (RAM2) mit gespeicherten Spaltennummern (DefCol) defekter Bildspalten dient, und bei dem die aus dem Defektspalten-Speicher (RAM2) ausgelesene Spaltennummer (DefCol) mit der Spaltenadresse (Column) verglichen wird und daraus das Defektsignal (Defect) gebildet wird.

2. Verfahren nach Anspruch 1,
bei dem die Zeiger im Zeigerspeicher und die Spaltennummern im Defektspalten-Speicher derartig gespeichert sind, dass
a) in einem ersten Fall mit mehreren defekten Bildpunkten in den Spalten in einer Zeile der zur Zeile gehörige Zeiger (Ptr) eine Speicherzelle (SA) im Defektspalten-Speicher adressiert, die die erste der zugehörigen Spaltennummern enthält und das die Spaltennummern der weiteren defekten Spalten der Zeile in darauffolgenden Speicherzellen des Defektspalten-Speichers in aufsteigender Reihenfolge abgelegt sind,
b) in einem zweiten Fall mit mehreren defekten Bildpunkten in einer Spalte die Zeiger (Ptr) mehrerer unterschiedlicher Zeilen auf dieselbe Zelle des Defektspalten-Speichers mit der zugehörigen Defektspaltennummer verweisen, und
c) in einem dritten Fall ohne defekte Bildpunkte in einer Zeile mit dem zugehörigen Zeiger (Ptr) eine eigens für diesen Fall vorgesehene Zelle (ENW) im Defektspalten-Speicher adressiert wird.

3. Verfahren nach Anspruch 1 oder 2,
bei dem, beim Auslesen eines Teilbildes, Defektspaltennummern, die kleiner als die Spaltennummern des Teilbildes sind überlesen und nicht korrigiert werden.

4. Verfahren nach einem der Ansprüche 1 bis 3,
bei dem die jeweils letzte Defektspalte einer jeweiligen Zeile anhand eines pro Defektspaltennummer vorhandenen Fortsetzungsbits (incEn) erkannt wird.

5. Vorrichtung zur Korrektur defekter Bildpunkte eines Bildsensors,
bei der eine durch eine Bildzeilennummer (Line) und eine Bildspaltennummer (Column) adressierbare Defektspeichereinheit (DS), ein Interpolator (INTER) und ein Umschalter (MUX) derart vorgesehen sind, daß in Abhängigkeit eines Defektsignals (Defect) entweder der Eingang für Eingangsbildpunktdaten oder ein Ausgang des Interpolators mit einem Ausgang für Ausgangsbildpunktdaten (Output) verbunden wird, wobei der Interpolator von Eingangsbildpunktdaten versorgt wird, bei der die Defektspeichereinrichtung einen Zeigerspeicher (RAM1) und einen Defektspaltenspeicher (RAM2) derart aufweist, daß der Zeigerspeicher durch die Bildzeilennummer (Line) adressiert wird und der Inhalt (Ptr) der so adressierten Zellen über eine Adreßweiterschalteinrichtung (AWS) den Defektspalten-Speicher (RAM2) adressiert, an dessen Ausgang eine Defektspaltennummer (DefCol (Ptr)) für die Zeile mit der betreffenden Bildzeilennummer anliegt, und bei der ein Vergleicher (E) vorhanden ist, der die Bildspaltenummer mit der Defektspaltennummer aus dem Defektspaltenspeicher vergleicht und daraus das Defektsignal bildet.

6. Vorrichtung nach Anspruch 5,
bei der der Defektspalten-Speicher (RAM2) derart ausgebildet ist, daß pro Defektspaltennummer ein Fortsetzungsbit vorhanden ist und
bei der die Adreßweiterschalteinheit durch das Fortsetzungsbit steuerbar ist.

7. Vorrichtung nach Anspruch 5 oder 6,
bei der ein weiterer Vergleicher (L) vorgesehen ist, der feststellt, ob die Defektspaltennummer kleiner als die Spaltennummer ist und bei der die Adreßweiterschalteinrichtung in diesem Fall die Adresse des Defektspalten-Speichers weiterschaltet, wenn das Fortsetzungsbit (incEn) gesetzt ist.

## Claims

1. Method for correcting defective pixels of an image sensor,
• in which, depending on a defect signal (Defect), input pixel data (Input) are output as output pixel data (Output) in a defect-free case and pixel data interpolated from adjacent pixel data are output as output pixel data in a defect case,
• in which the defect signal is formed from an image line address (Line) and an image column address (Column) such that a pointer memory (RAM1) is addressed by means of the image line address, wherein the pointer memory (RAM1) contains a pointer (Ptr) for each of at least a part of the image lines, the pointer (Ptr) serving for addressing a defect column memory (RAM2) having stored therein column numbers (DefCol) of defective image columns, and
• in which the column number (DefCol) read from the defect column memory (RAM2) is compared with the column address (Column) and the defect signal (Defect) is formed therefrom.

2. Method according to claim 1, in which the pointer in the pointer memory and the column numbers in the defect column memory are stored in such a way that
a) in a first case with multiple defect pixels in the columns of a line, the pointer (Ptr) belonging to the line addresses a memory cell (SA) in the defect column memory, which memory cell (SA) contains the first of the associated column numbers, and that the column numbers of the further defective columns of the line are deposited in increasing order in subsequent memory cells of the defect column memory,
b) in a second case with multiple defective pixels in a column, the pointers (Ptr) of multiple different lines refer to the same cell of the defect column memory with the associated defect column number, and
c) in a third case without defective pixels in a line, a cell (ENW) in the defect column memory provided specifically for this case is addressed with the associated pointer (Ptr).

3. Method according to claim 1 or 2, in which, during reading of a subimage, defect column numbers which are smaller than the column numbers of the subimage are overread and are not corrected.

4. Method according to anyone of the claims 1 to 3, in which the last respective defect column of a respective line is identified using a continuation bit (incEn) which is present per defect column number.

5. Device for correcting defective pixels of an image sensor,
• in which a defect memory unit (DS) addressable with an image line number (Line) and an image column number (Column), an interpolator (INTER) and a changeover switch (MUX) are provided such that, in dependency on a defect signal (Defect), either the input for input pixel data or an output of the interpolator is connected to an output for output pixel data (Output), the interpolator being supplied by input pixel data,
• in which the defect memory device comprises a pointer memory (RAM1) and a defect column memory (RAM2) such that the pointer memory is addressed by the image line number (Line) and the content (Ptr) of the such addressed cells addresses, via an address advancing device (AWS), the defect column memory (RAM2), at whose output a defect column number (DefCol (Ptr)) for the line with the relevant image line number is present, and
• in which a comparator (E) is present, which compares the image column number with the defect column number from the defect column memory and forms the defect signal therefrom.

6. Device according to claim 5, in which the defect column memory (RAM2) is designed such that a continuation bit is present per defect column number, and in which the address advancing unit can be controlled by the continuation bit.

7. Device according to claim 5 or 6, in which a further comparator (L) is provided, which ascertains whether the defect column number is smaller than the column number, and in which, in this case, the address advancing device advances the address of the defect column memory if the continuation bit (incEn) is set.

## Revendications

1. Procédé de correction des pixels endommagés d'un capteur d'images,
dans lequel, en fonction d'un signal de défaut (Defect), dans un cas sans défaut, les données de pixels d'entrée (Input) sont émises sous forme de données de pixels de sortie (Output) et, dans un cas avec défaut, des données de pixels interpolées à partir des données de pixels voisins sont émises sous forme de données de pixels de sortie,
dans lequel le signal de défaut est formé à partir d'une adresse de ligne de l'image (Line) et d'une adresse de colonne de l'image (Column), de telle sorte que l'adresse de ligne de l'image permette l'adressage d'une mémoire pour pointeurs (RAM1) qui, pour au moins une partie des lignes de l'image, contient respectivement un pointeur (Ptr) qui est utilisé pour l'adressage d'une mémoire pour colonnes endommagées (RAM2) contenant des numéros de colonnes (DefCol) mémorisés pour les colonnes endommagées de l'image, et
dans lequel le numéro de colonne (DefCol), extrait de la mémoire pour colonnes endommagées (RAM2), est comparé à l'adresse de la colonne (Column) et le signal de défaut (Defect) est formé à partir de là.

2. Procédé selon la revendication 1,
dans lequel les pointeurs dans la mémoire pour pointeurs et les numéros de colonne dans la mémoire pour colonnes endommagées sont mémorisés de telle sorte que
a) dans un premier cas avec plusieurs pixels endommagés dans une ligne dans les colonnes, le pointeur (Ptr) associé à la ligne exécute l'adressage d'une cellule (SA) de la mémoire pour colonnes endommagées qui contient le premier des numéros de colonne correspondant, et les numéros de colonne des autres colonnes endommagées de la ligne sont stockés dans un ordre croissant dans des cellules successives de la mémoire pour colonnes endommagées,
b) dans un deuxième cas avec plusieurs pixels endommagés dans une colonne, les pointeurs (Ptr) de plusieurs lignes différentes renvoient vers la même cellule de la mémoire pour colonnes endommagées contenant le numéro de colonne endommagée correspondant, et
c) dans un troisième cas sans pixels endommagés dans une ligne, le pointeur (Ptr) correspondant exécute l'adressage d'une cellule (ENW) prévue spécialement pour ce cas dans la mémoire pour colonnes endommagées.

3. Procédé selon la revendication 1 ou 2,
dans lequel, pendant la lecture d'une image partielle, des numéros de colonnes endommagées, qui sont inférieurs aux numéros des colonnes de l'image partielle, sont ignorés et ne sont pas corrigés.

4. Procédé selon une des revendications 1 à 3,
dans lequel chaque dernière colonne endommagée d'une ligne respective est reconnue à l'aide d'un bit de continuation (incEn) présent dans chaque numéro de colonne endommagée.

5. Dispositif de correction des pixels endommagés d'un capteur d'images,
dans lequel il est prévu une unité de mémoire des défauts (DS), adressable par un numéro de ligne de l'image (Line) et un numéro de colonne de l'image (Column), un interpolateur (INTER) et un commutateur (MUX), de telle sorte que, en fonction d'un signal de défaut (Defect), soit l'entrée pour les données de pixels d'entrée, soit une sortie de l'interpolateur est reliée à une sortie pour les données de pixels de sortie (Output), l'interpolateur recevant des données de pixels d'entrée,
dans lequel l'unité de mémoire des défauts contient une mémoire pour pointeurs (RAM1) et une mémoire pour colonnes endommagées (RAM2), de telle sorte que l'adressage de la mémoire pour pointeurs est exécuté par le numéro de lignes de l'image (Line) et de telle sorte que le contenu (Ptr) des cellules ainsi adressées exécute l'adressage de la mémoire pour colonnes endommagées (RAM2) par l'intermédiaire d'une unité de poursuite d'adressage (AWS), dont la sortie capte un numéro de colonne endommagée (DefCol (Ptr)) pour la ligne avec le numéro de ligne de l'image concerné, et
dans lequel est prévu un comparateur (E), qui compare le numéro de colonne de l'image et le numéro de colonne endommagée issu de la mémoire pour colonnes endommagées et forme à partir de là le signal de défaut.

6. Dispositif selon la revendication 5,
dans lequel la mémoire pour colonnes endommagées (RAM2) est conçue de telle sorte qu'un bit de continuation est présent dans chaque numéro de colonne endommagée et
dans lequel l'unité de poursuite d'adressage peut être commandée par le bit de continuation.

7. Dispositif selon la revendication 5 ou 6,
dans lequel est prévu un autre comparateur (L), qui détecte si le numéro de colonne endommagée est inférieur au numéro de colonne, et
dans lequel, dans ce cas, l'unité de poursuite d'adressage poursuit l'adressage de la mémoire pour colonnes endommagées lorsque le bit de continuation (incEn) est positionnné.
